# EUROPÄISCHE PATENTSCHRIFT

(11) **EP 1 846 662 B1**
(45) Veröffentlichungstag und Bekanntmachung des Hinweises auf die Patenterteilung: **27.03.2013**
(21) Anmeldenummer: 06700550.4
(22) Anmeldetag: 18.01.2006
(51) Int. Cl.: F16B 7/18, E06B 3/96

(54) **VORRICHTUNG ZUM VERBINDEN DER SCHENKEL EINES RECHTECKIGEN RAHMENS**
DEVICE FOR CONNECTING THE ARMS OF A RECTANGULAR FRAME
DISPOSITIF POUR RELIER LES BRANCHES D'UN CADRE RECTANGULAIRE

(30) Priorität: 11.02.2005 CH 236052005
(43) Veröffentlichungstag der Anmeldung: 24.10.2007
(73) Patentinhaber: EKU AG, CH-8370 Sirnach (CH)
(72) Erfinder: GÄMPERLE, Walter, CH-9242 Oberuzwil (CH); MUTHER, Marco, CH-8372 Wiezikon/Simach (CH)
(74) Vertreter: Gachnang, Hans Rudolf
(86) Internationale Anmeldenummer: PCT/CH2006/000050
(87) Internationale Veröffentlichungsnummer: WO 2006/084400

(56) Entgegenhaltungen:
- FR-A- 2 330 898
- FR-A1- 2 430 507
- FR-A1- 2 908 178
- GB-A- 1 543 588
- JP-A- 2001 090 446

## Beschreibung

Gegenstand der Erfindung ist eine Verbindungsanordnung zum Verbinden der Schenkel eines rechteckigen Rahmens gemäss Oberbegriff des Patentanspruchs 1.

Rahmen für Fenster oder Türen werden heute meist aus extrudierten Profilstäben aus Aluminium oder Kunststoff hergestellt. Um eine möglichst kostengünstige Eckverbindung der vertikalen und horizontal liegenden Schenkel zu ermöglichen, ist es bereits bekannt, entweder die Schenkelenden in 45°-Winkel, d.h. in Gehrung zuzuschneiden und durch einen ins Innere der Profilstäbe ragendes Winkelstück miteinander zu verbinden. Solche Verbindungen sind zwar optisch sehr schön und mechanisch optimal, doch haben sie den Nachteil, dass einerseits der Materialverbrauch sehr gross ist (jeder Schenkel benötigt Material für die volle Rahmenbreite bzw. -höhe) und zudem ist eine unlösbare und zudem unsichtbare Befestigung der Winkel in den Schenkeln nur schwer erreichbar.

Als nächstleigender Stand der Technik wird FR2330890 angesehen, das eine Verbindungsanordung mit den Merkmalen des Oberbegriffs des Anspruchs 1 Offenbart.

Aus der GB 1 543 588 ist ein Verbindungselement bekannt, mit welchem zwei aus Profilstäben bestehende Schenkel eines Rahmens stumpf miteinander verbindbar sind. Das bekannte Verbindungselement ist stabförmig und derart profiliert, dass es in einer stirnseitig angeordneten und parallel zur Längsausdehnung des Schenkels verlaufenden Nut einschiebbar ist, und andererseits sind daran zwei Bohrungen vorgesehen, mit denen das Verbindungselement stirnseitig durch Verbindungsmittel mit dem vertikalen Schenkel verschraubbar ist. Um die gegenseitige Verbindung eines vertikalen und eines horizontalen Schenkels sicherzustellen, muss durch den vertikalen Schenkel hindurch eine weitere Bohrung vorgesehen sein, mit der eine Schraube in das eingeschobene Verbindungselement eingedreht werden kann. Einerseits wird durch die Verschraubung eine sichtbare Bohrung im vertikalen Schenkel notwendig und zudem ist die Verschraubung durch die aus zwei Löcher bestehende Bohrung sehr aufwändig.

Eine Aufgabe der vorliegenden Erfindung besteht nun darin, die bekannte Verbindungsanordnung derart weiter zu bilden, dass eine Verbindung zweier Schenkel ohne Vorarbeiten an beiden Schenkeln möglich ist.

Gelöst wird diese Aufgabe durch eine Verbindungsanordnung gemäss den Merkmalen des Patentanspruchs 1.

Es gelingt durch die erfindungsgemässe

Verbindungsanordnung, stirnseitig aneinander stossende Schenkel eines Rahmens miteinander zu verbinden, ohne dass dazu irgend welche vorbereitende Massnahmen, wie Bohrungen, und auch keine zur temporären gegenseitigen Fixierung notwendigen Schablonen bereitzustellen sind. Das Verbindungselement kann direkt durch Schrauben stirnseitig mit dem einen Schenkel verbunden und danach der Schenkel mit dem daran befestigten Verbindungselement am anderen Schenkel aufgesteckt werden. Zur Sicherung der Verbindung können anschliessend Schrauben in entsprechend an den Profilen angebrachte stirnseitig zugängliche Schraubkanäle eingedreht werden. Die am Verbindungselement angebrachte Platte mit den Schraublöchern erhöht die Steifigkeit des Rahmens, da die Verbindung nun nicht nur zwischen dem profilierten Stab und der Nut erfolgt, sondern zusätzlich über die winkelförmige Platte, welche zudem die Stirnseite des einen Schenkels verschliesst, auch Kräfte aufgefangen werden können.

Anhand eines illustrierten Ausführungsbeispiels wird die Erfindung näher erläutert. Es zeigen
- Figur 1: die Verbindung zweier Schenkel eines Rahmens mit einem Verbindungselement,
- Figur 2: das Ende des vertikalen Schenkels,
- Figur 3: das Ende des horizontalen Schenkels,
- Figur 4: das Verbindungselement mit vier Verbindungsschrauben.

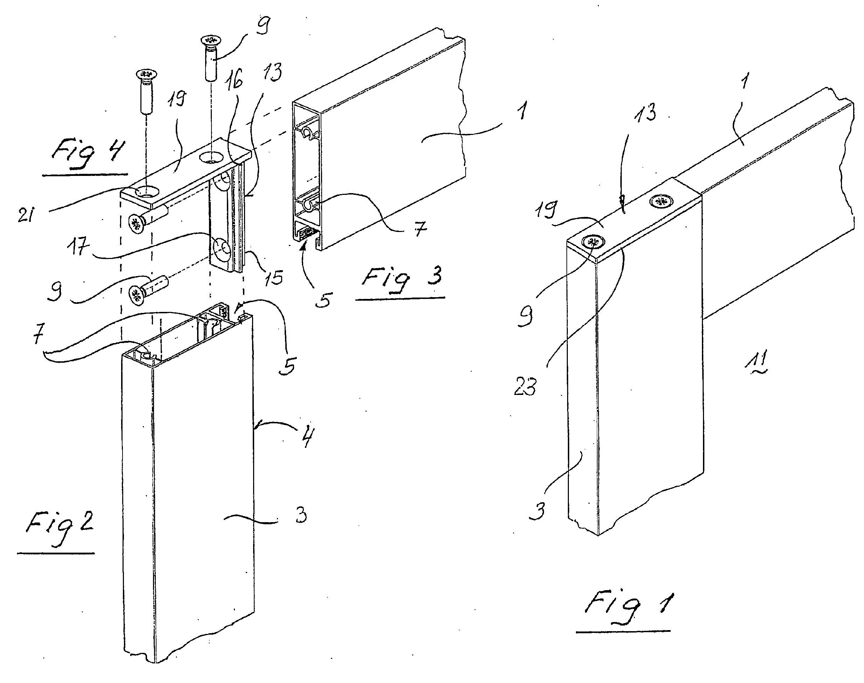

Die in den Figuren 2 und 3 dargestellten Enden eines horizontalen Schenkels 1 und eines vertikalen Schenkels 3 zeigen das Innenleben dieser als extrudierte Profilstäbe erzeugten Rahmenteile. An einer der schmalen Längsseiten 4 sind T- oder Schwalbenschwanz-Nuten 5 ausgebildet, welche das Einlegen einer Tür- oder Fensterfüllung aus Glas, Holz oder Kunststoff und einer Dichtung ermöglichen. Im zentralen Querschnitts-Bereich der beiden Schenkel 1,3 sind Schraubkanäle 7 angebracht, welche das Eindrehen von selbstschneidenden Schrauben 9 ermöglichen. Die Ausbildung der Schraubkanäle 7 wird hier weiter nicht erklärt, da solche im Stand der Technik hinlänglich bekannt sind. Die aus Profilstäben hergestellten Schenkel 1,3, welche einen Rahmen 11 bilden, können glatte oder profilierte Oberflächen aufweisen.

In Figur 4 ist ein Verbindungselement 13 dargestellt, welches die Gestalt eines profilierten Stabes 15 aufweist, dessen Geometrie derart ausgebildet ist, dass das Verbindungselement 13 spielfrei in die entsprechend der Geometrie des Stabes 15 ausgebildete Nut 5 am vertikalen Schenkel 3 in Längsrichtung einschiebbar ist und dass der Stab 15 nach dem Einschieben in die Nut 5 in dieser im wesentlichen spielfrei gehalten ist. Im Stab 15 des

Verbindungselements 13 ist mindestens eine Bohrung 17 angebracht, durch welche eine Schraube 9 hindurchgeführt und, wenn das Verbindungselement 13 stirnseitig an.den horizontalen Schenkel 1 angelegt wird, durch eine Schraube 9 mit diesem verbunden werden kann. Die Schraube 9 ist im untenliegenden Schraubkanal 7 geführt und gehalten. Vorzugsweise sind jedoch zwei Bohrungen 17 im Stab 15 vorgesehen, um eine entsprechend starre und satt anliegende Verbindung zwischen dem Verbindungselement 13 und der Stirnseite des horizontalen Schenkels 1 des Rahmens 11 zu erzeugen.

An der Stirnfläche am oberen Ende 16 des Stabes 15 des Verbindungselements 13 ist weiter eine Platte 19 befestigt, in welcher mindestens ein Loch 21 zum Hindurchführen einer Schraube 9 ausgebildet ist. Die Platte 19 kann mit dem Stab 15 verschweisst oder verklebt sein. Das Verbindungselement 13 kann aber auch als Druckgussteil einstückig hergestellt sein.

Die Montage eines Rahmens 11 gestaltet sich äusserst einfach, da die Rahmenteile, d.h. die Schenkel 1 und 3 ohne Materialverlust zugeschnitten, dann jeweils am horizontalen Schenkel 3 beidseitig mit Schrauben 9 das Verbindungselement 13 angeschraubt werden kann. Danach können die beiden horizontalen Schenkel 3 der Stäbe 15 des Verbindungselements 13 von oben bzw. von unten in die Nuten 5 eingeschoben und zur Sicherung der Verbindung noch die Schrauben 9 von oben und unten in die Schraubkanäle 7 der vertikalen Schenkel 3 eingedreht werden.

Zum Austauschen einer zerbrochenen Füllung muss nur die Schraub- oder Steckverbindung wieder gelöst werden. Dies kann in wenigen Minuten erfolgen.

Alternativ zu einem Loch 21 können an der Platte 19 auch Dornen, Konen, Schwerspannstifte oder Blechschrauben-Schäfte befestigt sein, welche eine kraftschlüssige Verbindung mit dem vertikalen Schenkel 3 ermöglichen (keine Abbildung). Die Verbindung des Verbindungselements 13 erfolgt in der zweiten Ausführungsform durch Einschlagen oder Einpressen der Dorne, Konen, Schwerspannstifte oder Blechschrauben-Schäfte in die Schraubkanäle (7) des vertikalen Schenkels (3).

In Figur 1 ist ersichtlich, dass nach der Verbindung der beiden Schenkel 1,3 durch das Verbindungselement 13 in der Aufsicht auf den Rahmen 11 nur die schmale Stirnfläche 23 des Verbindungselements sichtbar bleibt.

## Patentansprüche

1. Verbindugungsanordnung zum Verbinden der beiden horizontalen und der beiden vertikalen Schenkel (1,3) eines rechteckigen Rahmens (11) aus extrudierten, mit mindestens einer Nut (5) versehenen Profilstäben, umfassend ein zweischenkliges Verbindungselement (13) mit einem Stab (15) mit mindestens einer Bohrung (17) zum Hindurchführen einer ersten Schraube (9), welcher Stab (15) im Querschnitt der Geometrie der Nut (5) in den Profilstäben (1,3) angepasst und in diese einschiebbar ausgebildet ist und eine daran im rechten Winkel angeformte oder befestigte Platte (19) mit mindestens einem Loch (21) zum Hindurchführen einer zweiten Schraube (9),
**dadurch gekennzeichnet, dass**
der Stab (15) an der Stirnfläche des horizontalen Schenkels (1) des Rahmens anliegt und die mindestens eine zweite Schraube (9) in einem im profilierten Schenkel (1) ausgebildeten Schraubkanal (7) eingreift und dass die Platte (19) an der Stirnfläche des vertikalen Schenkels (3) anliegt und mit mindestens einer ersten Schraube (9), die im Schraubkanal (7) verankert ist mit dem vertikalen Schenkel (3) verbunden ist.

2. Verbindungsanordnung nach Anspruch 1, **dadurch gekennzeichnet, dass** der Stab (13) in der Nut (5) am vertikalen Schenkel (3) eingeschoben von der zweiten Schraube (9) gehalten ist.

3. Verbindungsanordnung nach Anspruch 1, **dadurch gekennzeichnet, dass** die Nut (5) einen Schwalbenschwanz- oder einen T-förmigen Querschnitt aufweist und dass der Querschnitt des Stabs (15) einen dem Querschnitt der Nut (5) entsprechenden Querschnitt aufweist, damit der Stab (15) in die Nut (5) einschiebbar ist.

4. Verbindungsanordnung nach Anspruch 1, **dadurch gekennzeichnet, dass** am Stab (15) als Befestigungsmittel anstelle von Schrauben (9) Dornen, Konen, Schwerspannstiften oder Blechschraubenschäften befestigt sind, welche dazu bestimmt sind, in die stirnseitigen Schraubkanäle (7) am horizontalen Schenkel (1) einzugreifen.

5. Verbindungsanordnung nach einem der Ansprüche 1 bis 4, **dadurch gekennzeichnet, dass** das Verbindungselement (13) aus Druckguss besteht.

6. Verbindungsanordnung nach einem der Ansprüche 1 bis 5, **dadurch gekennzeichnet, dass** die extrudierten Profile der Schenkel (1,3) aus Aluminium oder aus Kunststoff bestehen.

## Claims

1. A connection arrangement for connecting the two horizontal and the two vertical legs (1, 3) of a rectangular frame (11) made of extruded profiled rods provided with at least one groove (5), comprising a two-leg connecting element (13) having a rod (15) having at least one bore (17) for introducing a first screw (9), the cross-section of which rod (15) is formed to be adapted to the geometry of the groove (5) in the profiled rods (1, 3) and to be insertable therein, and a plate (19) formed thereon or fastened thereto at right angles, having at least one hole (21) for introducing a second screw (9),
**characterized in that**
the rod (15) rests against the front face of the horizontal leg (1) of the frame and the at least one second screw (9) engages a screw channel (7) formed in the profiled leg (1), and that the plate (19) rests against the front face of the vertical leg (3) and is connected to the vertical leg (3) by at least one first screw (9) which is anchored in the screw channel (7).

2. A connection arrangement according to claim 1, **characterized in that** the rod (13) is inserted in the groove (5) on the vertical leg and held by the second screw (9).

3. A connection arrangement according to claim 1, **characterized in that** the groove (5) has a dovetail or T-shaped cross-section and that the cross-section of the rod (15) has a cross-section corresponding to the cross-section of the groove (5) so that the rod is insertable into the groove (5).

4. A connection arrangement according to claim 1, **characterized in that** pins, cones, spring cotters or tapping screw shanks, which are designed to engage the front-side screw channels (7) on the horizontal leg (1), are fastened to the rod (15) as fasteners instead of screws (9).

5. A connection arrangement according to any one of claims 1 to 4, **characterized in that** the connecting element (13) is made of die casting.

6. A connection arrangement according to any one of claims 1 to 5, **characterized in that** the extruded profiles of the legs (1, 3) are made of aluminium or of plastic.

## Revendications

1. Dispositif d'assemblage pour assembler les deux branches horizontales et les deux branches verticales (1, 3) d'un cadre rectangulaire (11) composé de barres profilées extrudées et pourvues d'au moins une rainure (5), comportant un élément d'assemblage à deux branches (13) avec une barre (15) avec au moins un forage (17) pour y introduire une première vis (9), la coupe transversale de laquelle barre (15) étant formée de manière à être adaptée à la géométrie de la rainure (5) sur les barres profilées (1, 3) et à être insérable dans celle-ci, et une plaque (19) raccordée ou fixée à ladite barre à angle droit et ayant au moins un trou (21) pour y introduire une seconde vis (9),
**caractérisé en ce que**
la barre (15) s'appui sur la face frontale de la branche horizontale (1) du cadre et l'au moins une seconde vis (9) s'engrène dans un canal de vissage (7) formé dans la branche profilée (1), et que la plaque (19) s'appuie sur la face frontale de la branche verticale (3) et est reliée à la branche verticale (3) par au moins une première vis (9) qui est ancrée dans le canal de vissage (7).

2. Dispositif d'assemblage selon la revendication 1, **caractérisé en ce que** la barre (13) est insérée dans la rainure (5) sur la branche verticale et tenue par la seconde vis (9).

3. Dispositif d'assemblage selon la revendication 1, **caractérisé en ce que** la rainure (5) a une coupe transversale en queue d'aronde ou en T et que la coupe transversale de la barre (5) présente une coupe transversale correspondant à la coupe transversale de la rainure (5) pour que la barre soit insérable dans la rainure (5).

4. Dispositif d'assemblage selon la revendication 1, **caractérisé en ce que** des mandrins, cônes, goupilles fendues ou tiges des vis à tôle qui sont destinés à s'engendrer dans les canaux de vissage (7) sur la face de la branche horizontale (1) sont fixés à la barre (15) comme moyen de fixation au lieu des vis (9).

5. Dispositif d'assemblage selon l'une quelconque des revendications 1 à 4, **caractérisé en ce que** l'élément d'assemblage (13) est en coulée sous pression.

6. Dispositif d'assemblage selon l'une quelconque des revendications 1 à 5, **caractérisé en ce que** les profilés extrudés des branches (1, 3) sont en aluminium ou en plastique.
